# FASCICULE DE BREVET EUROPEEN

(11) **EP 3 044 060 B1**
(45) Date de publication et mention de la délivrance du brevet: **04.10.2017**
(21) Numéro de dépôt: 14755880.3
(22) Date de dépôt: 05.08.2014
(51) Int. Cl.: B60W 30/18, B60W 20/14, B60W 30/16

(54) **PROCEDE POUR UN VEHICULE HYBRIDE OU ELECTRIQUE DE REGULATION DE LA DISTANCE AVEC UN VEHICULE PRECEDENT**
VERFAHREN FÜR EIN HYBRID- ODER ELEKTROFAHRZEUG ZUR REGELUNG DES ABSTANDS ZU EINEM VORAUSFAHRENDEN FAHRZEUG
METHOD FOR A HYBRID OR ELECTRIC VEHICLE FOR REGULATING THE DISTANCE WITH A PRECEDING VEHICLE

(30) Priorité: 10.09.2013 FR 1358676
(43) Date de publication de la demande: 20.07.2016
(73) Titulaire: Technoboost, 75116 Paris (FR)
(72) Inventeur: MIRANDA, Paulo, F-94290 Villeneuve le Roi (FR); SABRIE, Julien, F-75013 Paris (FR); CAUBET, Roland, F-92210 St Cloud (FR); DESMOINEAUX, Nicolas, F-92400 Courbevoie (FR)
(74) Mandataire: Rosenberg, Muriel Sylvie
(86) Numéro de dépôt international: PCT/FR2014/052033
(87) Numéro de publication internationale: WO 2015/036670

(56) Documents cités:
- EP-A1- 2 460 704
- DE-A1- 10 017 662
- DE-A1-102006 017 176
- DE-A1-102008 051 001
- US-A1- 2013 204 472

## Description

La présente invention concerne pour un véhicule hybride ou électrique, un procédé de régulation de la distance le séparant du véhicule précédent, ainsi qu'un système de régulation mettant en oeuvre un tel procédé, et un véhicule hybride ou électrique équipé de ce système. DE 100 17 662 A1 divulgue un procédé de régulation de la distance séparant au cours d'un roulage, un véhicule d'un véhicule précédent, ce procédé adaptant à partir d'une consigne de vitesse, la vitesse du véhicule afin d'obtenir une distance minimum de base avec le véhicule précédent correspondant à un temps intercalaire prédéfini mis pour la parcourir.

Les véhicules hybrides utilisant l'énergie électrique, et les véhicules électriques, comportent généralement une machine électrique réversible qui peut délivrer une puissance mécanique pour la traction de ce véhicule, ou appliquer un couple de freinage sur les roues en travaillant en génératrice, ce qui permet de récupérer une énergie cinétique du véhicule en produisant un courant électrique de recharge les batteries.

Les véhicules hybrides utilisant d'autres types d'énergie, comme une pression hydraulique ou pneumatique, comportent aussi généralement une machine capable de freiner le véhicule et de recharger les accumulateurs stockant cette énergie.

Ces véhicules comportent de plus un circuit de freinage mécanique commandé par le conducteur au moyen d'une pédale de frein, qui agit de manière mécanique sur les roues pour les freiner par l'action de patins de frottement.

Certains véhicules comportent par ailleurs un système de régulation adaptatif de la vitesse, qui à partir d'une régulation de la vitesse du véhicule, adapte cette vitesse suivant la circulation afin d'obtenir une distance minimum avec le véhicule précédent correspondant à un temps prédéfini mis pour parcourir cette distance, qui dépend de la vitesse.

Généralement le conducteur affiche une consigne de vitesse et une consigne de temps intermédiaire entre les véhicules, la régulation de vitesse utilisant un moyen de mesure de la distance réelle, cherche alors à converger vers cette vitesse de consigne sous réserve que le temps intermédiaire ne soit pas inférieur à la consigne demandée.

La distance minimum avec le véhicule précédent ne dépend alors que de la vitesse, cette distance augmente avec un accroissement de la vitesse afin d'assurer la sécurité. Toutefois pour les véhicules hybrides ou électriques récupérant une énergie lors des freinages, une telle stratégie ne permet pas d'optimiser la consommation d'énergie.

En effet dans le cas d'un besoin de freinage léger du véhicule pour réguler sa vitesse, si les accumulateurs d'énergie ne sont pas pleins, ils peuvent effectivement recevoir une puissance délivrée par le freinage avec récupération d'énergie. Mais si ces accumulateurs sont pleins, il peut être alors nécessaire dans les mêmes conditions d'utiliser le circuit de freinage mécanique qui dissipe l'énergie dans les frottements, ce qui augmente la consommation du véhicule. Ce problème s'aggrave dans le cas d'un roulage en descente, où une énergie plus importante peut être dissipée par le freinage mécanique.

Ces problèmes se posent pour les véhicules hybrides réalisant lors des freinages une production et un stockage d'énergie électrique, ou d'une autre énergie comme une énergie hydraulique ou pneumatique.

La présente invention a notamment pour but d'éviter ces inconvénients de la technique antérieure.

Elle propose à cet effet un procédé de régulation de la distance séparant au cours d'un roulage un véhicule hybride ou électrique disposant d'une machine délivrant un couple de freinage en produisant une énergie qui est stockée dans des accumulateurs, d'un véhicule précédent, ce procédé adaptant à partir d'une consigne de vitesse, la vitesse du véhicule afin d'obtenir une distance minimum de base avec le véhicule précédent correspondant à un temps intercalaire prédéfini mis pour la parcourir, caractérisé en ce qu'il modifie la distance en fonction de l'état de charge des accumulateurs, pour obtenir une distance optimisée à appliquer à la régulation de vitesse du véhicule.

Un avantage de ce procédé de régulation est qu'il peut donner une augmentation du temps intercalaire et donc de la distance avec le véhicule précédent, quand les accumulateurs sont suffisamment remplis, permettant d'effectuer une régulation de distance comprise entre la distance minimum de base et la distance modifiée, ce qui évite certains freinages quand le véhicule précédent ralentit. On évite ainsi de dissiper une énergie qui ne peut pas être récupérée, ce qui améliore le rendement énergétique globale.

Le procédé de régulation de la distance selon l'invention peut en outre comporter une ou plusieurs des caractéristiques suivantes, qui peuvent être combinées entre elles.

Avantageusement, le procédé de régulation ajoute une distance additionnelle à la distance minimum de base, qui est croissante quand le niveau de charge des accumulateurs est plus important.

Avantageusement, la distance additionnelle reste nulle pour un niveau de charge des accumulateurs inférieur à environ 50%.

En particulier pour un niveau de charge des accumulateurs proche de 100%, l'augmentation de distance peut correspondre à un temps intercalaire supplémentaire d'environ une seconde.

Avantageusement, le procédé de régulation ajoute une distance additionnelle à la distance minimum de base, qui augmente quand la pente de la route est décroissante.

Avantageusement, la distance additionnelle reste nulle pour une pente de la route positive ou sensiblement neutre.

En particulier pour une descente d'environ 10%, l'augmentation de distance peut correspondre à un temps intercalaire supplémentaire d'environ une seconde.

L'invention a aussi pour objet un système de régulation de la distance séparant au cours d'un roulage un véhicule hybride ou électrique disposant d'une machine délivrant un couple de freinage en produisant une énergie qui est stockée dans des accumulateurs, d'un véhicule précédent, ce système mettant en oeuvre un procédé de régulation comprenant l'une quelconque des caractéristiques précédentes.

L'invention a de plus pour objet un véhicule automobile hybride ou électrique disposant d'une machine délivrant un couple de freinage en produisant une énergie qui est stockée dans des accumulateurs, ce véhicule comportant un système de régulation de la distance le séparant au cours d'un roulage d'un véhicule précédent, comprenant la caractéristique précédente.

L'invention sera mieux comprise et d'autres caractéristiques et avantages apparaîtront plus clairement à la lecture de la description ci-après donnée à titre d'exemple, en référence aux dessins annexés dans lesquels :
- La figure 1 est un tableau présentant pour un système de régulation de la distance selon l'art antérieur, en fonction du temps demandé pour parcourir cette distance et de la vitesse du véhicule, la distance minimum de base nécessaire ;
- la figure 2 est un tableau présentant pour un système de régulation de la distance selon l'invention, la distance qu'il faut ajouter suivant la charge des accumulateurs à la distance minimum de base ;
- la figure 3 est un tableau présentant pour ce système de régulation de la distance, la distance qu'il faut ajouter suivant la pente de la route à la distance minimum de base ; et
- la figure 4 présente un exemple de roulage à 30 km/h pour un véhicule comportant le système de régulation de la distance selon l'invention.

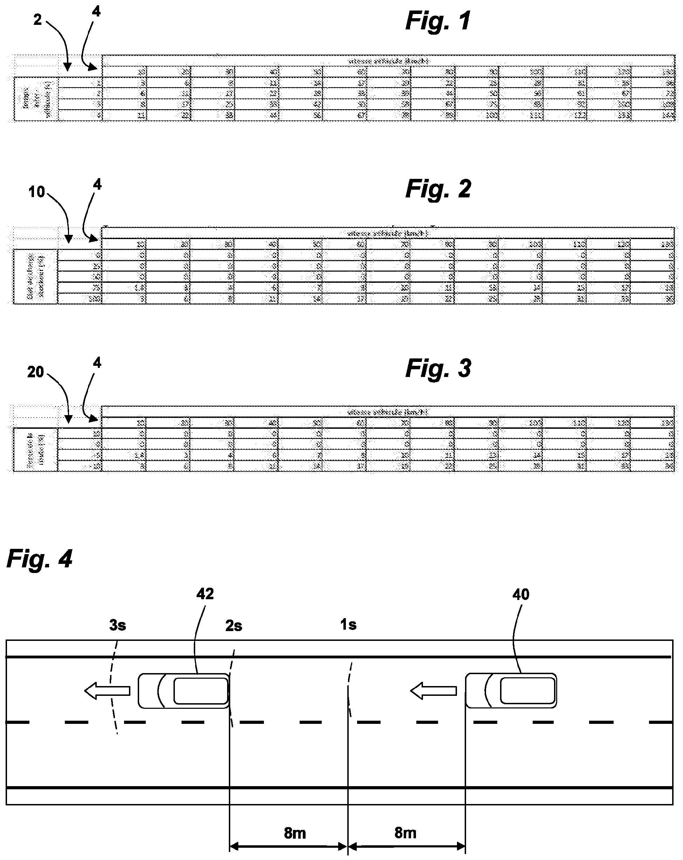

Le tableau de la figure 1 présente une première colonne 2 indiquant la consigne de temps intercalaire prédéfini demandé par le conducteur, mis pour parcourir la distance avec le véhicule précédent, qui va de 1 à 4 secondes. Le conducteur utilise pour cette demande une commande au tableau de bord qui lui permet en donnant des impulsions, d'augmenter ou de diminuer ce temps suivant un incrément fixé.

Le tableau comporte une première ligne 4 présentant la vitesse du véhicule allant de 10 à 130 km/h, qui est prise en compte par le système afin de calculer à partir du temps intercalaire demandé la distance minimum de base exprimée en mètre que la régulation de vitesse de ce véhicule va chercher à assurer, tout en respectant la vitesse maximum fixée par le système de régulation ou de limitation de la vitesse.

On constate que pour une même vitesse du véhicule la distance minimum est proportionnelle au temps prédéfini, et que pour un temps prédéfini la distance minimum est proportionnelle à cette vitesse.

Le tableau de la figure 2 présente une première colonne 10 indiquant le niveau de charge des accumulateurs mesuré pendant le roulage lors du relâchement de la pédale d'accélérateur, qui est réparti suivant cinq plages de niveau allant de 0 à 100%.

En fonction de la vitesse du véhicule présentée par la première ligne 4, le système de régulation de la distance selon l'invention ajoute la distance additionnelle indiquée dans ce tableau à la distance minimum de base donnée par le tableau de la figure 1, pour obtenir une distance corrigée par l'état de charge des accumulateurs.

On notera que la distance additionnelle est nulle pour un niveau de charge des accumulateurs inférieur à 50%, et augmente ensuite progressivement en fonction de ce niveau de charge, tout en restant proportionnelle à la vitesse du véhicule.

On notera aussi que pour un niveau de charge des accumulateurs proche de 100%, l'augmentation de distance est comprise suivant la vitesse du véhicule entre 3 et 36m, ce qui correspond à un temps intercalaire supplémentaire d'une seconde.

Le tableau de la figure 3 présente une première colonne 20 indiquant la pente de la route exprimée en pourcentage, et mesurée pendant le roulage lors du relâchement de la pédale d'accélérateur, qui est répartie suivant quatre plages d'inclinaison allant de +10% à -10%.

En fonction de la vitesse du véhicule présentée par la première ligne 4, le système de régulation de la distance selon l'invention ajoute de la même manière la distance additionnelle indiquée dans ce tableau à la distance minimum de base, pour obtenir une distance corrigée par la pente de la route.

On notera que la distance additionnelle est nulle pour une pente positive ou neutre, et augmente ensuite progressivement en fonction de la pente descendante de la route, tout en restant proportionnelle à la vitesse du véhicule.

On notera aussi que pour une descente d'environ 10%, l'augmentation de distance est comprise suivant la vitesse du véhicule entre 3 et 36m, ce qui correspond à un temps intercalaire supplémentaire d'une seconde.

Le système de régulation de la distance effectue alors à partir de la distance minimum de base donnée par le tableau de la figure 1, une addition des deux distances additionnelles venant du niveau de charge des accumulateurs et de la pente de la route, afin d'obtenir une distance optimisée à appliquer à la régulation de vitesse du véhicule.

La distance optimisée est ainsi dans certains cas augmentée par rapport à la distance minimum de base, afin de limiter les ralentissements nécessaires du véhicule tant que cette distance minimum n'est pas atteinte, car le freinage à récupération d'énergie ne pourrait pas absorber une énergie importante à cause du niveau de charge des accumulateurs trop élevé, ou de la descente de la route suffisamment forte qui demanderait une puissance de freinage trop importante.

Le freinage avec récupération d'énergie est utilisé modérément jusqu'à ce que la distance réelle atteigne la distance minimum de base. Ensuite le freinage par le circuit mécanique peut être mis en oeuvre pour respecter cette distance minimum si les conditions de roulage l'imposent, avec une dissipation d'énergie.

La figure 4 présente un exemple de véhicule 40 roulant à une vitesse de 30km/h sur une route plate, pour un conducteur qui a demandé un temps intercalaire d'une seconde avec le véhicule précédent 42, ce qui donne une distance minimum de base de 8m.

En fonction de la charge des accumulateurs qui est maximum dans cet exemple, le système de régulation de distance ajoute une longueur de 8m, ce qui donne une distance optimisée de 16m portant le temps intercalaire à deux secondes. Le système de régulation ralentit le véhicule 40 pour obtenir cette distance optimale dans des conditions normales de roulage, donnant une marge de 8m vers l'avant avant d'arriver à la distance minimum, permettant de limiter les besoins de freinage pendant le suivi du véhicule précédent 42.

On réalise ainsi de manière simple et économique, avec seulement des compléments de logiciels mis en oeuvre par le calculateur de la fonction de régulation de la vitesse, une optimisation de la distance avec le véhicule précédent, permettant une réduction de la consommation d'énergie par une limitation des besoins de freinages qui ne pourraient pas récupérer d'énergie, ainsi que des relances du véhicule nécessaires après ces freinages, qui consomment de l'énergie.

## Revendications

1. **-** Procédé de régulation de la distance séparant au cours d'un roulage, un véhicule hybride ou électrique (40) disposant d'une machine délivrant un couple de freinage en produisant une énergie qui est stockée dans des accumulateurs, d'un véhicule précédent (42), ce procédé adaptant à partir d'une consigne de vitesse, la vitesse du véhicule afin d'obtenir une distance minimum de base avec le véhicule précédent correspondant à un temps intercalaire prédéfini mis pour la parcourir, **caractérisé en ce qu'**il modifie la distance en fonction de l'état de charge des accumulateurs (10), pour obtenir une distance optimisée à appliquer à la régulation de vitesse du véhicule.

2. **-** Procédé de régulation selon la revendication 1, **caractérisé en ce qu'**il ajoute une distance additionnelle à la distance minimum de base, qui est croissante quand le niveau de charge des accumulateurs est plus important.

3. **-** Procédé de régulation selon la revendication 2, **caractérisé en ce que** la distance additionnelle reste nulle pour un niveau de charge des accumulateurs inférieur à environ 50%.

4. **-** Procédé de régulation selon la revendication 2 ou 3, **caractérisé en ce que** pour un niveau de charge des accumulateurs proche de 100%, l'augmentation de distance correspond à un temps intercalaire supplémentaire d'environ une seconde.

5. **-** Procédé de régulation selon l'une quelconque des revendications précédentes, **caractérisé en ce qu'**il ajoute une distance additionnelle à la distance minimum de base, qui augmente quand la pente de la route est décroissante.

6. **-** Procédé de régulation selon la revendication 5, **caractérisé en ce que** la distance additionnelle reste nulle pour une pente de la route positive ou sensiblement neutre.

7. **-** Procédé de régulation selon la revendication 5 ou 6, **caractérisé en ce que** pour une descente d'environ 10%, l'augmentation de distance correspond à un temps intercalaire supplémentaire d'environ une seconde.

8. **-** Système de régulation de la distance séparant au cours d'un roulage, un véhicule hybride ou électrique (40) disposant d'une machine délivrant un couple de freinage en produisant une énergie qui est stockée dans des accumulateurs, d'un véhicule précédent (42), **caractérisé en ce qu'**il met en oeuvre un procédé de régulation réalisé suivant l'une quelconque des revendications précédentes.

9. **-** Véhicule automobile hybride ou électrique (40) disposant d'une machine délivrant un couple de freinage en produisant une énergie qui est stockée dans des accumulateurs, **caractérisé en ce qu'**il comporte un système de régulation de la distance le séparant au cours d'un roulage d'un véhicule précédent (42), réalisé suivant la revendication précédente.

## Patentansprüche

1. Verfahren für ein Hybrid- oder Elektrofahrzeug (40), das über eine Maschine verfügt, die ein Bremsmoment liefert, wobei eine Energie erzeugt wird, die in Akkus gespeichert wird, zur Regelung des Abstands zu einem vorausfahrenden Fahrzeug (42) während des Fahrens, wobei dieses Verfahren ab einem Geschwindigkeitssollwert die Geschwindigkeit des Fahrzeugs anpasst, um einen Mindestbasisabstand zu dem vorausfahrenden Fahrzeug zu erhalten, entsprechend einer zu dessen Überwindung notwendigen vordefinierten Abstandszeit, **dadurch gekennzeichnet, dass** es den Abstand in Abhängigkeit von dem Ladezustand der Akkus (10) verändert, um einen optimierten Abstand zu erhalten, der für die Regelung der Geschwindigkeit des Fahrzeugs anzuwenden ist.

2. Regelungsverfahren nach Anspruch 1, **dadurch gekennzeichnet, dass** es einen zusätzlichen Abstand zu dem Mindestbasisabstand hinzufügt, der größer wird, wenn der Ladezustand der Akkus höher ist.

3. Regelungsverfahren nach Anspruch 2, **dadurch gekennzeichnet, dass** der zusätzliche Abstand bei einem Ladezustand der Akkus unter ungefähr 50% gleich Null bleibt.

4. Regelungsverfahren nach Anspruch 2 oder 3, **dadurch gekennzeichnet, dass** bei einem Ladezustand der Akkus nahe 100% die Abstandsvergrößerung einer zusätzlichen Abstandszeit von ungefähr einer Sekunde entspricht.

5. Regelungsverfahren nach einem der vorhergehenden Ansprüche, **dadurch gekennzeichnet, dass** es einen zusätzlichen Abstand zu dem Mindestbasisabstand hinzufügt, der größer wird, wenn das Gefälle der Straße abnimmt.

6. Regelungsverfahren nach Anspruch 5, **dadurch gekennzeichnet, dass** der zusätzliche Abstand bei einem positiven oder im Wesentlichen neutralen Gefälle der Straße gleich Null bleibt.

7. Regelungsverfahren nach Anspruch 5 oder 6, **dadurch gekennzeichnet, dass** bei einem Gefälle von ungefähr 10% die Abstandsvergrößerung einer zusätzlichen Abstandszeit von ungefähr einer Sekunde entspricht.

8. System für ein Hybrid- oder Elektrofahrzeug (40), das über eine Maschine verfügt, die ein Bremsmoment liefert, wobei eine Energie erzeugt wird, die in Akkus gespeichert wird, zur Regelung des Abstands zu einem vorausfahrenden Fahrzeug (42) während des Fahrens, **dadurch gekennzeichnet, dass** es ein Regelungsverfahren einsetzt, das nach einem der vorhergehenden Ansprüche verwirklicht ist.

9. Hybrid- oder Elektrofahrzeug (40), das über eine Maschine verfügt, die ein Bremsmoment liefert, wobei eine Energie erzeugt wird, die in Akkus gespeichert wird, **dadurch gekennzeichnet, dass** es ein System zur Regelung des Abstands zu einem vorausfahrenden Fahrzeug (42) während des Fahrens umfasst, das nach dem vorhergehenden Anspruch verwirklicht ist.

## Claims

1. A method for regulating the distance, during driving, separating a hybrid or electric vehicle (40) having a machine delivering a braking torque while producing energy that is stored in batteries, from a preceding vehicle (42), said method using a speed setpoint to adapt the speed of the vehicle in order to obtain a minimum basic distance from the preceding vehicle corresponding to a predefined lapse of time needed to travel it, **characterized in that** it modifies the distance as a function of the charge state of the batteries (10), to obtain an optimized distance to apply to the speed regulation of the vehicle.

2. The regulating method according to Claim 1, **characterized in that** it adds an additional distance to the minimum basic distance, which is increasing when the charge level of the batteries is greater.

3. The regulating method according to Claim 2, **characterized in that** the additional distance remains zero for a charge level of the batteries less than approximately 50%.

4. The regulating method according to Claim 2 or 3, **characterized in that** for a charge level of the batteries close to 100%, the distance increase corresponds to a supplementary lapse of time of approximately one second.

5. The regulating method according to any one of the preceding claims, **characterized in that** it adds an additional distance to the minimum basic distance, which increases when the gradient of the road is decreasing.

6. The regulating method according to Claim 5, **characterized in that** the additional distance remains zero for a positive or substantially neutral gradient of the road.

7. The regulating method according to Claim 5 or 6, **characterized in that** for a descent of approximately 10%, the distance increase corresponds to a supplementary lapse of time of approximately one second.

8. A system for regulating the distance, during driving, separating a hybrid or electric vehicle (40) having a machine delivering a braking torque while producing energy that is stored in batteries, from a preceding vehicle (42), **characterized in that** it implements a regulating method realized according to any one of the preceding claims.

9. A hybrid or electric vehicle (40) having a machine delivering a braking torque while producing energy that is stored in batteries, **characterized in that** it comprises a system for regulating the distance, during driving, separating it from a preceding vehicle (42), realized according to the preceding claim.
